(19) Europäisches Patentamt
European Patent Office
Office européen des brevets

(11) **EP 4 292 888 B1**

(12) **EUROPEAN PATENT SPECIFICATION**

(45) Date of publication and mention
of the grant of the patent:
**26.11.2025 Bulletin 2025/48**

(21) Application number: **23177605.5**

(22) Date of filing: **06.06.2023**

(51) International Patent Classification (IPC):
***B60T 7/04*** *(2006.01)*      ***B60T 8/172*** *(2006.01)*
***B60T 8/32*** *(2006.01)*      ***B60T 13/66*** *(2006.01)*

(52) Cooperative Patent Classification (CPC):
**B60T 7/042; B60T 8/172; B60T 8/32; B60T 13/662;**
B60T 2230/04

(54) **COMFORT BRAKE CONTROL SYSTEM AND CONTROL METHOD FOR VEHICLE**

KOMFORTBREMSSTEUERSYSTEM UND STEUERVERFAHREN FÜR EIN FAHRZEUG

SYSTÈME DE COMMANDE DE FREIN DE CONFORT ET PROCÉDÉ DE COMMANDE POUR VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.06.2022 CN 202210691857**

(43) Date of publication of application:
**20.12.2023 Bulletin 2023/51**

(73) Proprietor: **Robert Bosch GmbH
70442 Stuttgart (DE)**

(72) Inventors:
• **HUANG, Chongxi**
**Suzhou, Jiangsu, 215021 (CN)**
• **Wang, Renrui**
**Suzhou, Jiangsu, 215021 (CN)**
• **ZHANG, Ying**
**Suzhou, Jiangsu, 215021 (CN)**

(56) References cited:
**DE-A1- 102018 202 737      DE-A1- 102018 203 679**

## Description

## Technical Field

This application relates to the field of vehicle braking technologies, and in particular, to a comfort brake control system and a comfort brake control method for a vehicle.

## Background

Recently, research on self-driving technologies has been very active. User experience of a self-driving vehicle directly affects user acceptance and trust in the self-driving vehicle, and further affects popularization of the self-driving vehicle. Therefore, solutions to improve the user experience of the self-driving vehicle need to be explored.

In the prior art, improving the user experience during vehicle braking is a challenge because too much attention to the user experience can create potential safety hazards, while ignoring the user experience can greatly reduce user satisfaction with self-driving vehicles. In addition, user experience may vary from person to person and may be described as "difficult to cater for all tastes". Based on existing vehicle braking strategies, it is difficult to satisfy user experience that is both differential and personalized.

## Summary

In this context, the present invention is intended to provide a comfort brake control scheme for a vehicle, which can provide an interface for a user to adjust a brake parameter, and be able to detect whether the adjustment satisfies safety and assess a comfort degree of vehicle braking after the adjustment, thereby achieving comfort brake that "caters for all tastes".

According to one aspect of the present invention, there is provided a comfort brake control system for a vehicle having multiple optional comfort brake levels, as defined in the appended independent claim 1, each comfort brake level comprising one or more brake parameters corresponding to the comfort brake level, the comfort brake control system comprising: a human-machine interaction interface, configured to provide an interface for modifying the one or more brake parameters and receive a modification to at least one of the one or more brake parameters; and a comfort brake module, configured to determine whether the modification satisfies a safety requirement, allow the modification when it is determined that the modification satisfies the safety requirement, and prohibit the modification when it is determined that the modification does not satisfy the safety requirement; wherein the comfort brake module is further configured to assess a comfort degree of vehicle braking after the modification if it is determined that the modification satisfies the safety requirement.

According to another aspect of the present invention, there is provided a comfort brake control method for a vehicle, as defined in the appended independent claim 14, optionally performed by the foregoing comfort brake control system, wherein the vehicle has multiple optional comfort brake levels, each comfort brake level comprises one or more brake parameters corresponding to the comfort brake level, and the method comprises: providing an interface for modifying the one or more brake parameters; receiving a modification to at least one of the one or more brake parameters; determining whether the modification satisfies the safety requirement; allowing the modification when it is determined that the modification satisfies the safety requirement; and prohibiting the modification when it is determined that the modification does not satisfy the safety requirement; and the method further comprises: assessing a comfort degree of vehicle braking after the modification if it is determined that the modification satisfies the safety requirement.

The above gives an overview of the main aspects of the present disclosure in order to allow for a basic understanding of these aspects. This overview is not intended to define the scope of any or all aspects of the present disclosure. The purpose of this overview is to provide some implementations of these aspects in a simplified form as a preamble to the detailed description given later.

Patent Literature DE 10 2018 202737 A1 provides a brake system with an electronic control unit and with a brake pedal whose pedal travel and / or pedal force can be detected by the control unit. Patent Literature DE 10 2018 203679 A1 provides a brake control system for a motor vehicle with a downhill control system.

## Brief Description of the Drawings

The technical solutions of the present disclosure are clearer from the following detailed description with reference to the accompanying drawings. It may be understood that these accompanying drawings are merely used for illustration purposes, but are not intended to limit the protection scope of the present disclosure.

FIG. 1 is a schematic diagram of a comfort brake control system for a vehicle according to an embodiment of the present disclosure.

FIG. 2 is a schematic diagram of a comfort brake level according to an embodiment of the present disclosure.

FIG. 3 is a flowchart of a comfort brake control process according to an embodiment of the present disclosure.

FIG. 4 is a flowchart of a comfort brake control process according to another embodiment of the present disclosure.

FIG. 5 is an example of a curve graph used in the comfort brake control process in FIG. 4.

FIG. 6 is a flowchart of a comfort brake control process according to still another embodiment of the present disclosure.

FIG. 7 is an example of a curve graph used in the comfort brake control process in FIG. 6.

FIG. 8 is a flowchart of a comfort brake control process according to yet another embodiment of the present disclosure

FIG. 9 is an example of a curve graph used in the comfort brake control process in FIG. 8.

FIG. 10 is a flowchart of a comfort brake control process according to yet another embodiment of the present disclosure.

FIG. 11 is a flowchart of a comfort brake control method according to an embodiment of the present disclosure.

## Description of Embodiments

Embodiments of the present disclosure are directed to a control strategy for vehicle comfort brake that is capable of allowing a user to modify a brake parameter to change a braking process and is capable of assessing a comfort degree of vehicle braking after the user adjusts the brake parameter from multiple dimensions.

According to an embodiment of the present disclosure, it is able to embody the follow-up of subjective feelings of the user, and it is able to calculate behavior characteristics of the vehicle during the braking process of the vehicle by virtue of algorithm logic, thereby realizing a comfort brake function that integrates user experience.

The following describes specific implementations of the present disclosure with reference to the accompanying drawings.

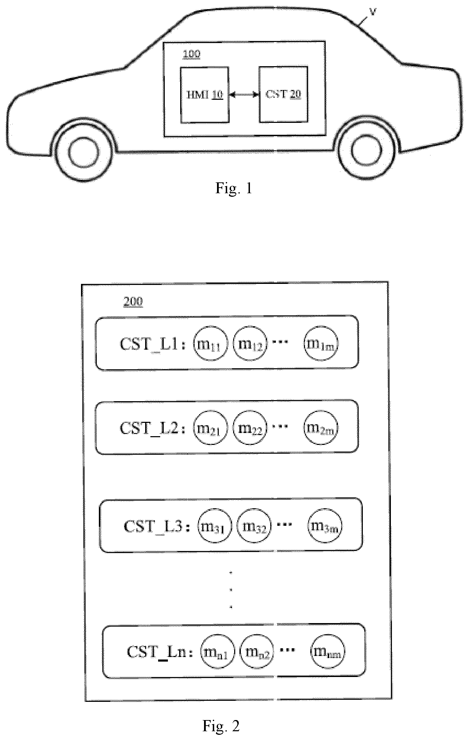

FIG. 1 schematically shows a comfort brake control system 100 for a vehicle V according to an embodiment of the present disclosure. The comfort brake control system 100 is disposed on the vehicle V. Therefore, the comfort brake control system 100 may also be referred to as an in-vehicle system. As shown in FIG. 1, the comfort brake control system 100 includes a human-machine interaction interface (HMI) 10 and a comfort brake module (CST) 20.

The human-machine interaction interface 10 is communicatively connected to the comfort brake module 20, and is configured to implement information exchange between the vehicle V and an in-vehicle infotainment system by a user. The human-machine interaction interface 10 may receive user input, and transmit the user input to the comfort brake module 20. The human-machine interaction interface 10 may further provide the user with information related to vehicle comfort brake. For example, a graphical user interface for the user to modify the brake parameter is presented to the user or voice associated with comfort brake is broadcast to the user.

The human-machine interaction interface 10 may implement information exchange between the user in the vehicle and the in-vehicle infotainment system by using multiple human-machine interaction manners, for example, one or more of a touchscreen, voice, action recognition (for example, gesture recognition), and a physical button.

In an embodiment, the human-machine interaction interface 10 includes one or more of: a central control screen of the vehicle V (for example, the user expresses, by touching the central control screen, a vehicle brake requirement of the user), a voice control system (for example, the user expresses, via voice, a vehicle brake requirement of the user), a gesture recognition system (for example, the user expresses, by using a predefined gesture, a vehicle brake requirement of the user), and a button or a knob disposed at a position convenient for the user in the vehicle to operate (for example, the user expresses, by operating the button or the knob, a vehicle brake requirement of the user).

The comfort brake module 20 implements the comfort brake function based on information from the human-machine interface 10 and information from one or more in-vehicle sensors (not shown), for example, determining whether the user-modified brake parameter satisfies the safety requirement and assessing the comfort degree of the vehicle after the user modified the brake parameter.

The comfort brake module 20 may be disposed in a control unit of a self-driving system of the vehicle V, or may be disposed in a domain controller of the vehicle V, or may be disposed in a control unit of a brake system of the vehicle V.

Multiple comfort brake levels are stored in the comfort brake module 20. The multiple comfort brake levels are predetermined and respectively correspond to different comfort levels in the braking process of the vehicle V. For example, the multiple comfort brake levels may include a high comfort brake level, an medium comfort brake level, and a low comfort brake level. The high comfort brake level indicates highest (for example, smoothest) comfort during braking. The medium comfort brake level indicates medium comfort during braking (e.g. medium smooth). The low comfort brake level indicates moderate comfort during braking (for example, slight shaking during braking).

In an embodiment, a quantity of comfort brake levels is predetermined, e.g., it is predetermined that there are six comfort brake levels. The quantity of comfort brake levels can be adjusted to more or less depending on user requirements before a new vehicle is delivered from factory or after the vehicle has been factory reset.

Each comfort brake level contains a brake parameter that corresponds to the comfort brake level. For example, the high comfort brake level includes a brake parameter corresponding to the high comfort brake level. The medium comfort brake level includes a brake parameter corresponding to the medium comfort brake. In addition, the low comfort brake level includes a brake parameter corresponding to the low comfort brake level.

The brake parameter includes one or more brake parameters directly or indirectly related to vehicle braking. The brake parameter may include brake pressure of at least one braking cylinder and a brake pressure change rate of the vehicle V. The brake pressure may be brake pressure of any one of multiple brake cylinders of the vehicle V, or may be a sum or an average value of brake pressures of the multiple brake cylinders. The brake parameter may further include a speed of the vehicle V during braking and an acceleration of the vehicle V during braking.

Each brake parameter may be a variable throughout the braking process, for example, the brake parameter may be expressed as a curve that varies with time during the braking process. The change range of the brake parameter at each comfort brake level is predetermined and is stored in the comfort brake module 20. For example, the brake pressure has a first change range at a high comfort brake level, a second change range at a medium comfort brake level, and a third change range at a low comfort brake level. The first to third change ranges are stored in the comfort brake module 20.

FIG. 2 schematically shows a comfort brake level according to an embodiment of the present disclosure. Referring to FIG. 2. the vehicle V has multiple optional comfort brake levels CST_L1, CST_L2, CST_L3, ... CST_Ln. Each comfort brake level includes a brake parameter corresponding to the level, that is, the comfort brake level CST_L1 includes corresponding brake parameters $m_{11}$, $m_{12}$, $m_{13}$, ... $m_{1m}$. The comfort brake level CST_L2 includes corresponding brake parameters $m_{21}$, $m_{22}$, $m_{23}$, ... $m_{2m}$, and the comfort brake level CST_Ln includes corresponding brake parameters $m_{n1}$, $m_{n2}$, $m_{n3}$, ... $m_{nm}$.

In an embodiment, the human-machine interaction interface 10 is implemented as a touchscreen. A graphical user interface 200 including multiple comfort brake levels and corresponding brake parameters is presented on the touchscreen. The graphical user interface 200 includes multiple button icons, each button icon corresponding to one brake parameter. For example, referring to FIG. 2, each of brake parameters $m_{12}$, $m_{13}$, ..., and $m_{1m}$ of a comfort brake level CST_L1 is presented on the touchscreen as one button icon. These button icons are capable of receiving user inputs, i.e., a user can select the brake parameter corresponding to the button by clicking the button icon and enter an interface (not shown) to modify the brake parameter. The human-machine interaction interface 10 receives user input, and transmits the received user input to the comfort brake module 20.

In another embodiment, the human-machine interaction interface 10 is implemented as a voice interaction interface that may receive voice input from the user for the user to modify the brake parameter. For example, the user expresses modifying of the brake parameter by speaking: "increase the brake pressure" or "shorten the brake duration". The human-machine interaction interface 10 receives the voice input, and transmits the user input to the comfort brake module 20.

The comfort brake module 20 may be implemented by using hardware, software, or a combination of software and hardware. Parts implemented by hardware may be implemented in one or more application-specific integrated circuits (ASIC), digital signal processors (DSP), data signal processing devices (DSPD), programmable logic devices (PLD), field programmable gate arrays (FPGA), processors, controllers, microcontrollers, microprocessors, electronic units designed to perform functions thereof, or combinations thereof. Parts implemented by software may be implemented by using microcode, program code, or a code segment, or may be stored in a machine-readable storage medium such as a storage component.

In an embodiment, the comfort brake module 20 includes a memory and a processor. The memory includes instructions, and when the instructions are executed by the processor, the processor performs the comfort brake control policy/comfort brake control method according to this embodiment of the present disclosure.

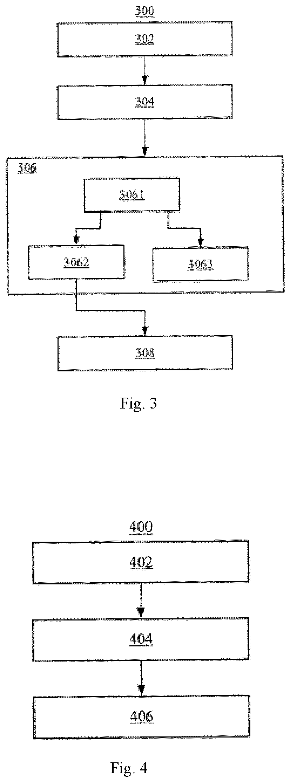

FIG. 3 shows a comfort brake control process 300 according to an embodiment of the present disclosure. According to the process 300, the user may modify the brake parameter according to specific needs or preferences, then the comfort brake module 20 determines whether the modification satisfies the safety requirement, and then assesses the comfort degree of vehicle braking after the modification if it is determined that the modification satisfies the safety requirement.

Referring to FIG. 3, in block 302, the human-machine interaction interface 10 provides an interface for the user to modify one or more brake parameters.

The interface may be a graphical user interface (for example, the graphical user interface 200 shown in FIG. 2). For example, the graphical user interface is presented on the touchscreen and includes a button icon that may receive a brake parameter from a user input. On the graphical user interface 200, the user may select a button icon for a brake parameter by clicking the button icon. The interface may also be a voice interaction interface, for example, the voice interaction interface broadcasts voice: "Please select a brake parameter to be adjusted".

In block 304, the human-machine interaction interface 10 receives user modification to at least one brake parameter.

Corresponding to the above implementation of the human-machine interaction interface 10, if the human-machine interaction interface 10 is implemented as a touchscreen, in response to the user selecting a button icon of a brake parameter, a text box to modify the brake parameter is presented on the touchscreen in the form of a small window or a lower interface, and the user may enter an expected value for the brake parameter in the text box, i.e. adjust the brake parameter from the current value to the expected value. Where the human-machine interaction interface 10 is implemented as a voice interaction interface, the user speaks: "increase the brake pressure by 10%" or "decrease the brake duration to 1s".

In block 306, the comfort brake module 20 determines whether the modification made by the user satisfies the safety requirement.

In an embodiment, the comfort brake module 20 determines whether the modification made by the user satisfies the safety requirement in the following manner: In block 3061, the comfort brake module 20 determines whether the modified at least one brake parameter is within a predetermined change range of the current comfort brake level. This change range is pre-stored in the comfort brake module 20. For example, if the current comfort brake level is medium, and the user-modified brake parameter is brake pressure, the comfort brake module 20 determines whether the user-modified brake pressure is still within the change range of the brake pressure at the medium comfort brake level. If the modified brake parameter is determined to be within the change range at the current comfort brake level, block 3062 is entered. In block 3062, the comfort brake module 20 determines that the modification satisfies the safety requirement. If the modified brake parameter is determined not to be within the change range at the current comfort brake level, block 3063 is entered. In block 3063, the comfort brake module 20 determines that the modification does not satisfy the safety requirement.

If it is determined that the modification does not satisfy the safety requirement, the comfort brake module 20 prohibits the modification, and the human-machine interaction interface 10 provides information to the user in the form of a graphical user interface or voice broadcasting that the modification does not satisfy the safety requirement. When it is determined that the modification satisfies the safety requirement, the process 300 continues.

Next, in block 308, the comfort brake module 20 assesses the comfort degree of vehicle braking after the modification if the modification satisfies the safety requirement. The assessment of the comfort degree may include one or more of: assessment of the comfort degree during the period from braking of the vehicle to the complete stop of the vehicle, assessment of the comfort degree during the period from the start of vehicle braking to the speed of the vehicle becoming a low speed, and the user's rating of experience of the vehicle's braking process based on his/her own experience.

It will be understood that the user's modification of the brake parameter may include modification to one or more brake parameters. With the user modifying multiple brake parameters, in determining safety, the comfort brake module 20 makes the above-mentioned safety determining separately for the modification to each brake parameter. Moreover, in assessing the comfort degree, the comfort brake module 20 assesses the modification to multiple brake parameters as a whole, rather than separately assessing the modification to each brake parameter.

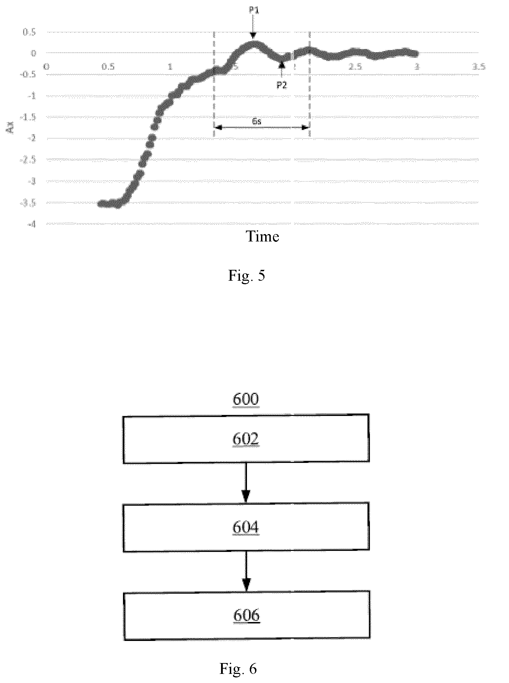

FIG. 4 shows a comfort brake control process 400 according to another embodiment of the present disclosure. According to the process 400, the comfort brake module 20 assesses the brake comfort degree based on the change in the comfort parameter during the period from vehicle braking to the vehicle being fully stopped. The comfort parameter refers to a parameter capable of characterizing the comfort of vehicle braking. For example, the comfort parameter includes one or more of: a longitudinal acceleration of a vehicle V, a pitch angle of the vehicle V, and a displacement amount of a suspension of the vehicle V. FIG. 5 is an example of a curve graph used in the process 400. In FIG. 5, the horizontal coordinate is time. The vertical coordinate is the longitudinal acceleration of the vehicle. The curve represents the change of the longitudinal acceleration of the vehicle over time during vehicle braking.

The following describes the process 400 with reference to FIG. 4 and FIG. 5.

In block 402, the comfort brake module 20 obtains the comfort parameter during the brake period. The comfort parameter may be measured by one or more in-vehicle sensors and transmitted from the one or more in-vehicle sensors to the comfort brake module 20. In an embodiment, the comfort parameter is the longitudinal acceleration of the vehicle V, see the curve in FIG. 5.

The brake period refers to the period from vehicle braking to full stop. For example, during the comfort braking of the vehicle, the brake period refers to the period from the vehicle speed dropping to zero or the vehicle speed approaching zero until the vehicle is fully stopped. The vehicle speed approaching zero may be set up in advance according to the specific application scenario or user needs, and may be adjustable.

In an embodiment, the comfort brake module 20 may determine the brake period in this manner: The longitudinal speed of the vehicle V is monitored, and the period of time for which the longitudinal speed of the vehicle is zero for predetermined duration is used as the brake period. In the brake period, i.e., the vehicle speed of the vehicle V has fallen to zero for the predetermined duration, but the vehicle V will experience transient shaking that can manifest itself in the change in the comfort parameter, for example, change in the longitudinal acceleration of the vehicle, change in the pitch angle of the vehicle, and change in the displacement amount of the vehicle suspension. Referring to FIG. 5, the predetermined duration is a defined period of time for the two dashed lines (i.e., predetermined duration of 6s). This predetermined duration is obtained according to an actual vehicle test result and/or model calculation and is stored in the comfort brake module 20 in advance.

In block 404, the comfort brake module 20 calculates an absolute value of a difference between a peak value and a valley value of the obtained comfort parameter in the brake period. For example, see FIG. 5, the peak value in the brake period is P1, the valley value is P2, and the comfort brake module 20 calculates the absolute value of the difference between the peak value P1 and the valley value P2.

In block 406, the comfort brake module 20 assesses the comfort degree based on the absolute value of the difference calculated in block 404 to obtain a first assessment result (i.e., an assessment result associated with the comfort parameter). The first assessment result includes: The smaller the absolute value of the difference, the higher the comfort degree; the greater the absolute value of the difference, the lower the comfort degree.

In block 406, the assessment result of the comfort degree may be expressed in a variety of ways. Two examples representing the assessment result are presented below.

In an embodiment, the comfort brake module 20 determines if the absolute value of the difference is less than a first comfort threshold (i.e., the comfort threshold associated with the comfort parameter). When the absolute value of the difference is determined to be less than the first comfort threshold, the first assessment result is that the comfort is satisfactory. When the absolute value of the difference is determined to be not less than the comfort threshold, the first assessment result is that the comfort is not satisfactory. In this embodiment, the first assessment result includes two levels of satisfactory comfort and unsatisfactory comfort.

In another embodiment, the comfort brake module 20 expresses the first assessment result with a score, e.g., a score of 0-100 points for the comfort degree, where 100 points indicate the assessment is the highest comfort degree (e.g., the absolute value of the difference is less than the first comfort threshold), and 0 points indicate the assessment is the lowest comfort degree (e.g., the absolute value of the difference is greater than or equal to twice the first comfort threshold). In this embodiment, the comfort brake module 20 may employ an algorithmic model or a machine learning model to give a score of the comfort degree.

It will be understood that the first comfort threshold is obtained based on an actual vehicle test result and/or model calculation and is stored in the comfort brake module 20 in advance.

Additionally, the comfort brake module 20 may obtain one or more comfort parameters and assess the comfort degree based on the one or more comfort parameters. With multiple comfort parameters obtained, the comfort brake module 20 may assess the comfort degree for each comfort parameter according to the above-described process 400 and then obtain a calculated average or weighted average of these comfort levels as a final assessment result of the comfort degree.

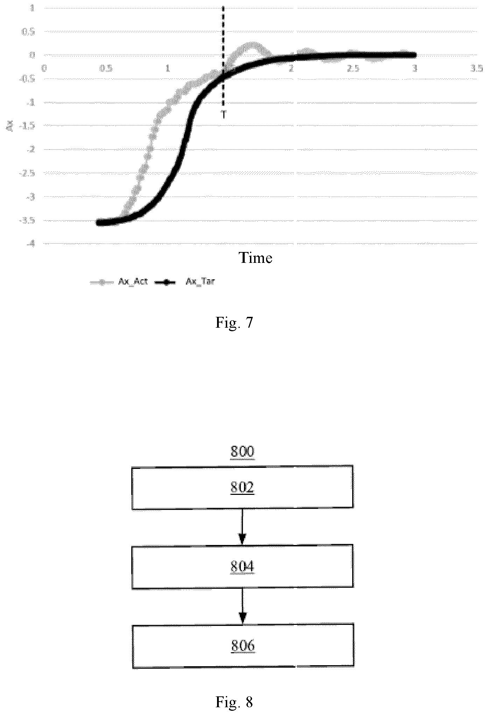

FIG. 6 shows a comfort brake control process 600 according to still another embodiment of the present disclosure. According to the process 600, the comfort brake module 20 assesses the comfort degree after adjusting the brake parameter based on the difference in acceleration between the actual longitudinal acceleration (hereinafter referred to as "actual acceleration") and the expected longitudinal acceleration (hereinafter referred to as "expected acceleration") of the vehicle V. FIG. 7 is an example of a curve graph used in the process 600. In FIG. 7, the horizontal coordinate represents the time of the braking process. The vertical coordinate is the longitudinal acceleration of the vehicle. The black curve represents the expected acceleration (Ax_Tar) of the vehicle in the braking process. A curve of light gray indicates the actual acceleration (Ax_Act) of the vehicle during the braking process. The expected acceleration may be obtained in advance by using a real vehicle test result and/or through model calculation. As shown in FIG. 7, the expected acceleration is expressed, e.g., as a curve of the expected acceleration changing over time, and is pre-stored in the comfort brake module 20.

The following describes the process 600 with reference to FIG. 6 and FIG. 7.

In block 602, the comfort brake module 20 obtains the actual acceleration during the high speed period in the braking process. The actual acceleration may be measured by one or more in-vehicle sensors and transmitted from the one or more in-vehicle sensors to the comfort brake module 20. For example, referring to FIG. 7, this actual acceleration is expressed as a curve of actual acceleration changing over time.

The "high speed segment" may also be referred to as a high speed period, referring to a period in which the vehicle speed of the vehicle V decreases from the speed at the moment of starting comfort brake to a predetermined speed. This period is a relatively high vehicle speed segment during the comfort braking process. The predetermined vehicle speed may be obtained in advance by using a real vehicle test result and/or through model calculation. For example, as shown in FIG. 7, the "high speed period" is a segment between the moment the vehicle starts braking and a moment T. The comfort brake module 20 may determine the high speed segment by monitoring the actual vehicle speed of the vehicle V. For example, speed deceleration begins after the vehicle makes the brake decision, and the comfort brake module 20 determines the segment between the vehicle speed decreasing to the speed at the moment when the comfort brake moment begins and the vehicle speed decreasing to the predetermined speed as the high speed segment/high speed period. It will be understood that the comfort brake module 20 may also determine the high speed period in other manners, for example, by identifying the first half of the braking process as the high speed period or the first 1/3 of the braking process as the high speed period.

In block 604, the comfort brake module 20 calculates an acceleration difference between the actual acceleration and the expected acceleration. For example, the actual acceleration curve in FIG. 7 is subtracted from the expected acceleration curve to obtain the acceleration difference. The acceleration difference can also be expressed as a curve for time changes (not shown in the graph). It will be understood that the expected acceleration here is also selected to correspond to the expected acceleration during the high speed period, e.g., see FIG. 7, in which an acceleration curve is taken from the start of the comfort brake moment to the moment T to participate in calculation.

In block 606, the comfort brake module 20 assesses the comfort degree based on the calculated acceleration difference to obtain a second assessment result (i.e., an assessment result associated with the acceleration difference). The second assessment result includes: The closer the acceleration difference is to zero, i.e., the closer the actual acceleration to the expected acceleration, the higher the comfort degree, and vice versa, the lower the comfort degree.

Similar to block 406, in block 606, the second assessment result may be expressed in a variety of ways. Two examples representing the second assessment result are presented below.

In an embodiment, the comfort brake module 20 determines whether an absolute value of the acceleration difference is less than a second comfort threshold (i.e., a comfort threshold associated with the acceleration difference). The second assessment is that the comfort is satisfactory when the absolute value of the acceleration difference is determined to be less than the second comfort threshold. The second assessment is that the comfort is not satisfactory when the absolute value of the acceleration difference is determined to be not less than the second comfort threshold. In this embodiment, the second assessment result includes two levels of satisfactory and unsatisfactory.

In another embodiment, the comfort brake module 20 expresses the second assessment result with a score, e.g., a score of 0-100 points for the comfort degree, where 100 points represents the highest comfort degree (e.g., zero absolute value of the difference) and 0 points represent the lowest comfort degree (e.g., the absolute value of the difference exceeds the second comfort threshold). In this embodiment, the comfort brake module 20 may employ an algorithmic model or a machine learning model to give a score of the comfort degree.

It will be understood that the second comfort threshold is obtained according to an actual vehicle test result and/or model calculation and is stored in the comfort brake module 20 in advance.

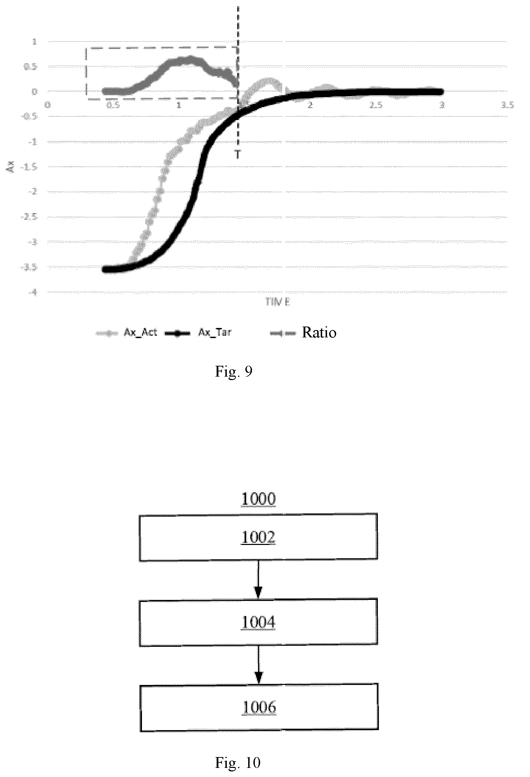

FIG. 8 shows a comfort brake control process 800 according to yet another embodiment of the present disclosure. According to the process 800, the comfort brake module 20 assesses the comfort degree based on a ratio between the above-described acceleration difference and the expected acceleration. FIG. 9 is an example of a curve graph used in the process 800. FIG. 9 is the same as FIG. 8 in the horizontal coordinate, vertical coordinate, black, and light gray curves. FIG. 9 differs from FIG. 8 in that: FIG. 9 adds a dark gray curve (Ratio) surrounded with a dashed box representing the above-mentioned ratio, i.e., the ratio between the acceleration difference and the expected acceleration.

The following describes the process 800 with reference to FIG. 8 and FIG. 9.

In block 802, the comfort brake module 20 calculates the ratio between the above-described acceleration difference and the expected acceleration. For example, referring to FIG. 9, the actual acceleration curve is subtracted from the expected acceleration curve and divided by the expected speed curve to obtain a dark gray curve representing the ratio.

In block 804, the comfort brake module 20 calculates an absolute value of the difference between the ratio and ratio threshold obtained in block 802. The ratio threshold is obtained according to an actual vehicle test result and/or model calculation and is stored in the comfort brake module 20 in advance. The ratio threshold may be a variable, e.g., expressed as a curve changing over time (not shown in the graph).

In block 806, the comfort brake module 20 assesses the comfort degree based on the absolute value of the difference calculated in block 804 to obtain a third assessment result (i.e., an assessment result associated with the ratio). The third assessment result includes: The smaller the absolute value of the difference, the higher the comfort degree; otherwise, the greater the absolute value of the difference, the lower the comfort degree.

Similar to blocks 406 and 606, in block 806, the third assessment result may be expressed in a variety of ways. Two examples representing the assessment result are presented below.

In an embodiment, the comfort brake module 20 determines if the absolute value of the difference is less than a third comfort threshold (i.e., a comfort threshold associated with the ratio). When the absolute value of the difference is determined to be less than the third comfort threshold, the third assessment result is that the comfort is satisfactory. When the absolute value of the difference is determined to be not less than the comfort threshold, the third assessment result is that the comfort is not satisfactory. In this embodiment, the third assessment result includes two levels of satisfactory and unsatisfactory.

In another embodiment, the comfort brake module 20 expresses the comfort degree assessment result with a score, e.g., a score of 0-100 points for the comfort degree, where 100 points represents the highest comfort degree (e.g., zero absolute value of the difference) and 0 points represent the lowest comfort degree (e.g., the absolute value of the difference exceeds the third comfort threshold). In this embodiment, the comfort brake module 20 may employ an algorithmic model or a machine learning model to give a score of the comfort degree.

It will be understood that the third comfort threshold is obtained according to an actual vehicle test result and/or model calculation and is stored in the comfort brake module 20 in advance.

In the above described comfort brake control processes 400, 600, and 800, the comfort degree of vehicle braking after modifying the brake parameter is assessed from different dimensions. According to the process 400, a comfort assessment can be made for the end of the vehicle braking (i.e., the brake period from the vehicle speed dropping to zero to full stop of the vehicle). According to the processes 600 and 800, a comfort assessment can be made for the early stage of vehicle braking (i.e., during high speed period where the vehicle speed is higher during the braking process). In this way, at different stages throughout the braking process, the brake comfort can be assessed in the most appropriate dimensions, and accurate and comprehensive brake comfort assessment results can be obtained.

FIG. 10 shows a comfort brake control process 1000 according to yet another embodiment of the present disclosure. According to the process 1000, the comfort brake module 20 performs comprehensive assessment based on the user experience and the above-described comfort assessment results and provides the comprehensive assessment result to the user.

In block 1002, the human-machine interaction interface 10 receives a user experience score. The user experience score is a score given by the user for the experience of the braking process of the vehicle after modifying the brake parameter. The higher the user experience score, the better the user experience. Conversely, the lower the user experience score, the worse the user experience. The range of user experience scores can be between 0-10, can be between 0-100, or can be expressed in other ranges or forms.

For example, the user modified the brake parameter, then the user experienced the braking process after the brake parameter is modified, and then the user rated his/her experience. The user may enter a given score on the touchscreen, for example, by entering "85 points" in the text box for the user experience score of the graphical user interface on the touchscreen. The user can also use voice to say the given score, for example, the user speaks: "The brake experience score is 85".

In block 1004, the comfort brake module 20 calculates a comprehensive score based on one or more of received user experience scores and the above described comfort assessment results. The higher the comprehensive score, the higher the degree or probability that this modification will be accepted.

In an embodiment, the comfort brake module 20 calculates the comprehensive score based on the following equation:

$$F=c*A1+(1-c)*A2$$

where F is the comprehensive score;
A1 is the user experience score after normalization processing;
A2 is the assessment result of the comfort degree after normalization processing; and
c is a weight coefficient of A1 and $0<c<1$.

With respect to parameter A1 in this embodiment, the comfort brake module 20 may normalize the user experience score to obtain a normalized user experience score A1 between 0-1.

With respect to parameter A2 in this embodiment, the comfort brake module 20 may normalize the assessment result of any of the first to third assessment results obtained in the above-described processes 400, 600, and 800 to obtain normalized parameter A2 between 0-1. The comfort brake module 20 may also normalize the first to third assessment results obtained in the above-described processes 400, 600, and 800, respectively, to obtain the calculated average to obtain normalized parameter A2 between 0-1. For example, the results obtained in the processes 400, 600, and 800 are 50, 60, and 80 points, respectively. Then the comfort brake module 20 first normalizes the 50 points, 60 points, and 80 points respectively to obtain: 0.5, 0.6, and 0.8, then calculates the average of 0.6 of 0.5, 0.6, and 0.7, i.e., normalized parameter A2 is obtained as 0.6.

Parameter c in this embodiment may be preset, e.g., pre-determining that the two factors of the user experience score and the comfort degree assessment result are equally important in the comprehensive score, and c may be set to 0.5 in advance. Also, parameter c may be adjusted according to an application scenario or user requirements. For example, a user requiring the vehicle braking process to follow his/her own feelings more may adjust c to a greater value, e.g., 0.8, and accordingly, the weight coefficient (1-c) of parameter A2 is 0.2.

Such a setting is advantageous. By normalizing both the user experience score and the comfort degree assessment result, and assigning weight coefficients to both, both factors can be considered into the comprehensive comfort score at the same time, and the degree of importance of both in determining the comprehensive comfort score can be determined based on the application scenario and user requirements. In this way, the comprehensive comfort assessment, i.e., it includes the subjective feelings of the user, and includes the characteristics of vehicle behavior calculated with the aid of algorithm logic, so as to obtain the comprehensive assessment results of a combination of subjectivity and objectivity, so as to achieve a comfort brake function that is both advanced and humanistic.

In block 1006, the human-machine interaction interface 10 provides the comprehensive score. For example, the comprehensive score is presented on the touchscreen or the comprehensive score is broadcast via voice.

It will be understood that the process 1000 is performed when the modification of the brake parameter satisfies the safety requirement. If the modification of the brake parameter does not satisfy the safety requirement, the modification will not be allowed and the comfort assessment process will not be performed.

In embodiments of the present disclosure, the "user" of the vehicle is capable of modifying the brake parameter of the comfort brake level, e.g., the user may include a person authorized to modify the brake parameter and a creator of the comfort brake system 100. The person authorized to modify the brake parameter includes, for example, an OEM engineer and an operator of a 4S store authorized to modify the brake parameter.

The embodiments of the present disclosure are applicable to a self-driving vehicle or a vehicle that has a self-driving capability. Herein, "the self-driving vehicle" or "the vehicle that has a self-driving capability" refers to a vehicle that is constructed to perform an operation without continuous intervention (for example, steering, accelerating, or braking) from a driver. "Self-driving" may include partial self-driving (for example, self-driving with a safety officer on a self-driving vehicle or with occasional human intervention) and full self-driving (for example, self-driving without a safety officer on a self-driving vehicle or without any human driver intervention). The self-driving capability of the vehicle may be implemented by using an advanced driving assistance system or an autonomous driving system that is disposed on the vehicle.

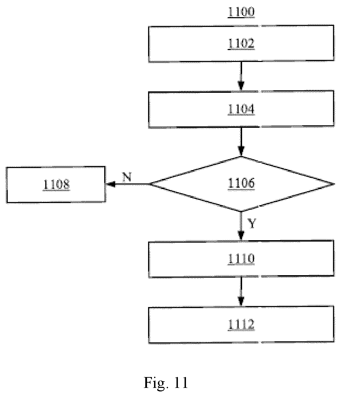

FIG. 11 shows a comfort brake control method 1100 according to an embodiment of the present disclosure. The method 1100 may be implemented by using the foregoing system 100, and therefore the foregoing description about the system 100 is also applicable to this method.

Referring to FIG. 11, in block 1102, the human-machine interaction interface 10 provides an interface for modifying one or more brake parameters.

In block 1104, the human-machine interaction interface 10 receives a modification to at least one of the one or more brake parameters.

In block 1106, the comfort brake module 20 determines whether the modification satisfies the safety requirement.

Upon determining that the result is affirmative, the process 1100 enters block 1110. In block 1110, the comfort brake module 20 allows the modification.

Upon determining that the result is negative, the process 1100 enters block 1108. In block 1108, the comfort brake module 20 prohibits the modification.

In block 1112, the comfort brake module 20 assesses the comfort degree of vehicle braking after the modification when the determining result is affirmative.

Although some implementations are described above, these implementations are provided by way of example only, and are not intended to limit the scope of the present disclosure.

**Claims**

1. A comfort brake control system (100) for a vehicle (V) having multiple optional comfort brake levels (CST_L1, CST_L2, ..., CST_Ln), each comfort brake level comprising one or more brake parameters corresponding to the comfort brake level, the comfort brake control system (100) comprising:

   a human-machine interaction interface (10), configured to provide an interface for modifying the one or more brake parameters and receive a modification to at least one of the one or more brake parameters; and
   a comfort brake module (20), configured to determine whether the modification satisfies a safety requirement, allow the modification when it is determined that the modification satisfies the safety requirement, and prohibit the modification when it is determined that the modification does not satisfy the safety requirement; wherein the comfort brake module (2) is further configured to assess a comfort degree of vehicle braking after the modification if it is determined that the modification satisfies the safety requirement.

2. The comfort brake control system (100) according to claim 1, wherein the one or more brake parameters comprise one or more of: a longitudinal vehicle speed, a longitudinal acceleration, brake pressure of at least one brake cylinder of the vehicle (V), and a change rate of the brake pressure.

3. The comfort brake control system (100) according to claim 1 or 2, wherein the comfort brake module (20) stores a predetermined change range of each brake parameter at each comfort brake level; and the determining whether the modification satisfies a safety requirement includes: determining whether the modified at least one brake parameter is within a predetermined change range of a current comfort brake level; if the determining result is affirmative, determining that the modification satisfies the safety requirement; and if the determining result is negative, determining that the modification does not satisfy the safety requirement.

4. The comfort brake control system (100) according to any one of claims 1-3, wherein the assessing the comfort degree comprises:

obtaining a comfort parameter that is capable of characterizing the comfort of the vehicle during a brake period in a braking process of the vehicle (V);

calculating an absolute value of a difference between a peak value and a valley value of the comfort parameter during the brake period; and

assessing the comfort degree based on the absolute value of the difference to obtain a first assessment result, wherein the first assessment result comprises: the smaller the absolute value of the difference is, the higher the comfort degree is.

5. The comfort brake control system (100) according to claim 4, wherein the comfort parameter comprises one or more of: a longitudinal acceleration of the vehicle (V), a pitch angle of the vehicle (V), and a displacement amount of a suspension of the vehicle (V).

6. The comfort brake control system (100) according to claim 4 or 5, wherein the assessing the comfort degree based on the absolute value of the difference comprises:

determining whether the absolute value of the difference is less than a first comfort threshold;

if the determining result is affirmative, the first assessment result is that the comfort is satisfactory; and

if the determining result is negative, the first assessment result is that the comfort is not satisfactory.

7. The comfort brake control system (100) according to any one of claims 1-6, wherein the comfort brake module (20) stores an expected acceleration in the braking process; and

the assessing the comfort degree comprises:

obtaining an actual acceleration during a high speed period in the braking process, wherein the high speed period refers to a period in which the vehicle speed of the vehicle (V) decreases from a vehicle speed at a moment of starting the comfort brake to a predetermined vehicle speed; calculating an acceleration difference between the actual acceleration and the expected acceleration; and assessing the comfort degree based on the acceleration difference to obtain a second assessment result, wherein the second assessment result comprises: the closer the acceleration difference to zero is, the higher the comfort degree is.

8. The comfort brake control system (100) according to claim 7, wherein the assessing the comfort degree based on the acceleration difference comprises:

determining whether the absolute value of the acceleration difference is less than a second comfort threshold;

if the determining result is affirmative, the second assessment result is that the comfort is satisfactory; and

if the determining result is negative, the second assessment result is that the comfort is not satisfactory.

9. The comfort brake control system (100) according to any one of claims 1-6, wherein the comfort brake module (20) stores an expected acceleration in the braking process; and

the assessing the comfort degree comprises:

obtaining an actual acceleration during a high speed period in the braking process, wherein the high speed period refers to a period in which the vehicle speed of the vehicle (V) decreases from a vehicle speed at a moment of starting the comfort brake to a predetermined vehicle speed; calculating an acceleration difference between the actual acceleration and the expected acceleration;

calculating a ratio between the acceleration difference and the expected acceleration; calculating an absolute value of a difference between the ratio and a ratio threshold for the ratio; and

assessing the comfort degree based on the absolute value of the difference to obtain a third assessment result, wherein the third assessment result comprises: the smaller the absolute value of the difference is, the higher the comfort degree is.

10. The comfort brake control system (100) according to claim 9, wherein the assessing the comfort degree based on the absolute value of the difference comprises:

determining whether the absolute value of the difference is less than a third comfort threshold; if the determining result is affirmative, the third assessment result is that the comfort is satisfactory; and

if the determining result is negative, the third assessment result is that the comfort is not satisfactory.

11. The comfort brake control system (100) according to any one of claims 1-10, wherein

the human-machine interaction interface (10) is further configured to receive a user experience score given by a user for experience of the vehicle braking process after the modification; the comfort brake module (20) is further configured to calculate a comprehensive score based on the user experience score and the assessment result of the comfort degree; and the human-machine interaction interface is further configured to provide the comprehensive score.

12. The comfort brake control system (100) according to claim 11, wherein the calculating a comprehensive score comprises calculating the comprehensive score based on the following formula:

$$F=c*A1+(1-c)*A2,$$

wherein F is the comprehensive score;
A1 is the user experience score after normalization processing;
A2 is the assessment result of the comfort degree after normalization processing; and
c is a weight coefficient of A1 and 0< c<1.

13. The comfort brake control system (100) according to any one of claims 1 to 12, wherein the comfort brake control system (100) is disposed in the vehicle (V);

the human-machine interaction interface (10) comprises at least one of: a voice interaction interface, a touchscreen, and a physical key; and
the comfort brake module (20) is disposed in a control unit of the brake system (100) of the vehicle or disposed in a domain controller of the vehicle (V).

14. A comfort brake control method for a vehicle, optionally performed by the comfort brake control system (100) of any one of claims 1-13, wherein the vehicle (V) has multiple optional comfort brake levels (CST_L1, CST_L2, ..., CST_Ln), each comfort brake level comprises one or more brake parameters corresponding to the comfort brake level, and the method comprises:

providing (1102) an interface for modifying the one or more brake parameters;
receiving (1104) a modification to at least one of the one or more brake parameters;
determining (1106) whether the modification satisfies the safety requirement;
allowing (1110) the modification when it is determined that the modification satisfies the safety requirement; and
prohibiting (1108) the modification when it is determined that the modification does not satisfy the safety requirement; and
the method further comprises: assessing (1112) a comfort degree of vehicle braking after the modification if it is determined that the modification satisfies the safety requirement.

**Patentansprüche**

1. Komfortbremssteuersystem (100) für ein Fahrzeug (V) mit mehreren optionalen Komfortbremsniveaus CST_L2,..., CST_Ln), wobei jedes Komfortbremsniveau einen oder mehrere Bremsparameter umfasst, die dem Komfortbremsniveau entsprechen, wobei das Komfortbremssteuersystem (100) umfasst:

eine Mensch-Maschine-Interaktionsschnittstelle (10), die dafür ausgelegt ist, eine Schnittstelle zum Ändern der ein oder mehreren Bremsparameter bereitzustellen und eine Änderung an wenigstens einem der ein oder mehreren Bremsparameter zu empfangen; und
ein Komfortbremsmodul (20), das dafür ausgelegt ist zu bestimmen, ob die Änderung eine Sicherheitsanforderung erfüllt, die Änderung zu erlauben, wenn bestimmt wird, dass die Änderung die Sicherheitsanforderung erfüllt, und die Änderung zu verbieten, wenn bestimmt wird, dass die Änderung die Sicherheitsanforderung nicht erfüllt; wobei das Komfortbremsmodul (2) ferner dafür ausgelegt ist, einen Komfortgrad der Fahrzeugbremsung nach der Änderung zu beurteilen, falls bestimmt wird, dass die Änderung die Sicherheitsanforderung erfüllt.

2. Komfortbremssteuersystem (100) nach Anspruch 1, wobei die ein oder mehreren Bremsparameter eines oder mehreres umfassen von: einer Fahrzeuglängsgeschwindigkeit, einer Längsbeschleunigung, einem Bremsdruck mindestens eines Bremszylinders des Fahrzeugs (V) und einer Änderungsgeschwindigkeit des Bremsdrucks.

3. Komfortbremssteuersystem (100) nach Anspruch 1 oder 2, wobei das Komfortbremsmodul (20) einen vorbestimmten Änderungsbereich jedes Bremsparameters bei jedem Komfortbremsniveau speichert; und das Bestimmen, ob die Änderung eine Sicherheitsanforderung erfüllt, beinhaltet: Bestimmen, ob der geänderte mindestens eine Bremsparameter innerhalb eines vorbestimmten Änderungsbereichs eines aktuellen Komfortbremsniveaus liegt; falls das Bestimmungsergebnis positiv ist, Bestimmen, dass die Änderung die Sicherheitsanforderung erfüllt; und falls das Bestimmungsergebnis negativ ist, Bestimmen, dass die Änderung die Sicherheitsanforderung nicht erfüllt.

4. Komfortbremssteuersystem (100) nach einem der Ansprüche 1 bis 3, wobei das Beurteilen des Komfortgrades umfasst:

   Gewinnen eines Komfortparameters, der in der Lage ist, den Komfort des Fahrzeugs während einer Bremsperiode in einem Bremsprozess des Fahrzeugs (V) zu charakterisieren; Berechnen eines absoluten Betrages einer Differenz zwischen einem Spitzenwert und einem Talwert des Komfortparameters während der Bremsperiode; und Beurteilen des Komfortgrades basierend auf dem absoluten Betrag der Differenz, um ein erstes Beurteilungsergebnis zu erhalten, wobei das erste Beurteilungsergebnis umfasst: Je kleiner der absolute Betrag der Differenz ist, desto höher ist der Komfortgrad.

5. Komfortbremssteuersystem (100) nach Anspruch 4, wobei der Kompfortparameter eines oder mehreres umfasst von: einer Längsbeschleunigung des Fahrzeugs (V), einem Nickwinkel des Fahrzeugs (V) und einem Verlagerungsbetrag einer Aufhängung des Fahrzeugs (V).

6. Komfortbremssteuersystem (100) nach Anspruch 4 oder 5, wobei das Beurteilen des Komfortgrades basierend auf dem absoluten Betrag der Differenz umfasst:

   Bestimmen, ob der absolute Betrag der Differenz kleiner als ein erster Komfortschwellenwert ist; falls das Bestimmungsergebnis positiv ist, ist das erste Beurteilungsergebnis, dass der Komfort zufriedenstellend ist; und falls das Bestimmungsergebnis negativ ist, ist das erste Beurteilungsergebnis, dass der Komfort nicht zufriedenstellend ist.

7. Komfortbremssteuersystem (100) nach einem der Ansprüche 1-6, wobei das Komfortbremsmodul (20) eine erwartete Beschleunigung in dem Bremsprozess speichert; und das Beurteilen des Komfortgrades umfasst:

   Gewinnen einer Ist-Beschleunigung während einer Hochgeschwindigkeitsperiode in dem Bremsprozess, wobei die Hochgeschwindigkeitsperiode eine Periode bezeichnet, in welcher sich die Fahrzeuggeschwindigkeit des Fahrzeugs (V) von einer Fahrzeuggeschwindigkeit zu einem Zeitpunkt des Beginns der Komfortbremsung auf eine vorbestimmte Fahrzeuggeschwindigkeit verringert; Berechnen einer Beschleunigungsdifferenz zwischen der Ist-Beschleunigung und der erwarteten Beschleunigung; und Beurteilen des Komfortgrades basierend auf der Beschleunigungsdifferenz, um ein zweites Beurteilungsergebnis zu erhalten, wobei das zweite Beurteilungsergebnis umfasst: Je näher die Beschleunigungsdifferenz an null ist, desto höher ist der Komfortgrad.

8. Komfortbremssteuersystem (100) nach Anspruch 7, wobei das Beurteilen des Komfortgrades basierend auf der Beschleunigungsdifferenz umfasst:

   Bestimmen, ob der absolute Betrag der Beschleunigungsdifferenz kleiner als ein zweiter Komfortschwellenwert ist; falls das Bestimmungsergebnis positiv ist, ist das zweite Beurteilungsergebnis, dass der Komfort zufriedenstellend ist; und falls das Bestimmungsergebnis negativ ist, ist das zweite Beurteilungsergebnis, dass der Komfort nicht zufriedenstellend ist.

9. Komfortbremssteuersystem (100) nach einem der Ansprüche 1-6, wobei das Komfortbremsmodul (20) eine erwartete Beschleunigung in dem Bremsprozess speichert; und das Beurteilen des Komfortgrades umfasst:

   Gewinnen einer Ist-Beschleunigung während einer Hochgeschwindigkeitsperiode in dem Bremsprozess, wobei die Hochgeschwindigkeitsperiode eine Periode bezeichnet, in welcher sich die Fahrzeuggeschwindigkeit des Fahrzeugs (V) von einer Fahrzeuggeschwindigkeit zu einem Zeitpunkt des Beginns der Komfortbremsung auf eine vorbestimmte Fahrzeuggeschwindigkeit verringert; Berechnen einer Beschleunigungsdifferenz zwischen der Ist-Beschleunigung und der erwarteten Beschleunigung; Berechnen eines Verhältnisses zwischen der Beschleunigungsdifferenz und der erwarteten Beschleunigung; Berechnen eines absoluten Betrages einer Differenz zwischen dem Verhältnis und einem Verhältnisschwellenwert für das Verhältnis; und Beurteilen des Komfortgrades basierend auf dem absoluten Betrag der Differenz, um ein drittes Beurteilungsergebnis zu erhalten, wobei das dritte Beurteilungsergebnis umfasst: Je kleiner der absolute Betrag der Differenz ist, desto höher ist der Komfortgrad.

10. Komfortbremssteuersystem (100) nach Anspruch 9, wobei das Beurteilen des Komfortgrades basierend auf dem absoluten Betrag der Differenz umfasst:

Bestimmen, ob der absolute Betrag der Differenz kleiner als ein dritter Komfortschwellenwert ist;
falls das Bestimmungsergebnis positiv ist, ist das dritte Beurteilungsergebnis, dass der Komfort zufriedenstellend ist; und
falls das Bestimmungsergebnis negativ ist, ist das dritte Beurteilungsergebnis, dass der Komfort nicht zufriedenstellend ist.

11. Komfortbremssteuersystem (100) nach einem der Ansprüche 1-10, wobei

die Mensch-Maschine-Interaktionsschnittstelle (10) ferner dafür ausgelegt ist, eine Benutzererfahrungs-Punktbewertung zu empfangen, die von einem Benutzer für eine Erfahrung des Fahrzeugbremsprozesses nach der Änderung angegeben wird;
das Komfortbremsmodul (20) ferner dafür ausgelegt ist, eine Gesamtpunktbewertung basierend auf der Benutzererfahrungs-Punktbewertung und dem Beurteilungsergebnis des Komfortgrades zu berechnen; und
die Mensch-Maschine-Interaktionsschnittstelle ferner dafür ausgelegt ist, die Gesamtpunktbewertung bereitzustellen.

12. Komfortbremssteuersystem (100) nach Anspruch 11, wobei das Berechnen einer Gesamtpunktbewertung das Berechnen der Gesamtpunktbewertung basierend auf der folgenden Formel umfasst:

$$F = c * A1 + (1-c) * A2,$$

wobei F die Gesamtpunktbewertung ist;
A1 die Benutzererfahrungs-Punktbewertung nach einer Normierungsverarbeitung ist;
A2 das Beurteilungsergebnis des Komfortgrades nach einer Normierungsverarbeitung ist; und
c ein Gewichtskoeffizient von A1 und $0 < c < 1$ ist.

13. Komfortbremssteuersystem (100) nach einem der Ansprüche 1 bis 12, wobei das Komfortbremssteuersystem (100) im Fahrzeug (V) angeordnet ist;

die Mensch-Maschine-Interaktionsschnittstelle (10) mindestens eines umfasst von: einer Sprachinteraktionsschnittstelle, einem Berührbildschirm und einem physischen Schlüssel; und
das Komfortbremsmodul (20) in einer Steuereinheit des Bremssystems (100) des Fahrzeugs angeordnet ist oder in einem Domänencontroller des Fahrzeugs (V) angeordnet ist.

14. Komfortbremssteuerverfahren für ein Fahrzeug, das optional von dem Komfortbremssteuersystem (100) nach einem der Ansprüche 1-13 ausgeführt wird, wobei das Fahrzeug (V) mehrere optionale Komfortbremsniveaus (CST_L1, CST_L2,..., CST_Ln) aufweist, wobei jedes Komfortbremsniveau einen oder mehrere Bremsparameter umfasst, die dem Komfortbremsniveau entsprechen, und das Verfahren umfasst:

Bereitstellen (1102) einer Schnittstelle zum Ändern der ein oder mehreren Bremsparameter;
Empfangen (1104) einer Änderung an wenigstens einem der ein oder mehreren Bremsparameter;
Bestimmen (1106), ob die Änderung die Sicherheitsanforderung erfüllt;
Erlauben (1110) der Änderung, wenn bestimmt wird, dass die Änderung die Sicherheitsanforderung erfüllt; und
Verbieten (1108) der Änderung, wenn bestimmt wird, dass die Änderung die Sicherheitsanforderung nicht erfüllt; und
das Verfahren ferner umfasst: Beurteilen (1112) eines Komfortgrades der Fahrzeugbremsung nach der Änderung, falls bestimmt wird, dass die Änderung die Sicherheitsanforderung erfüllt.

**Revendications**

1. Système de commande de freinage de confort (100) pour un véhicule (V) comportant plusieurs niveaux de freinage de confort optionnels (CST_L1, CST_L2, ..., CST_Ln), chaque niveau de freinage de confort comprenant un ou plusieurs paramètres de freinage correspondant au niveau de freinage de confort, le système de commande de freinage de confort (100) comprenant :

une interface d'interaction homme-machine (10), configurée pour fournir une interface permettant de modifier les un ou plusieurs paramètres de freinage et de recevoir une modification d'au moins l'un des un ou plusieurs paramètres de freinage ; et
un module de freinage de confort (20), configuré pour déterminer si la modification satisfait à une exigence de sécurité, autoriser la modification lorsqu'il est déterminé que la modification satisfait à l'exigence de sécurité, et interdire la modification lorsqu'il est déterminé que la modification ne satisfait pas à l'exigence de sécurité ; où le module de freinage de confort (2) est en outre configuré pour évaluer un degré de confort du freinage du véhicule après la modification s'il est déterminé que la modification satisfait à l'exigence de sécurité.

2. Système de commande de freinage de confort (100) selon la revendication 1, dans lequel les un ou plusieurs paramètres de freinage comprennent un ou plusieurs des éléments suivants : une vitesse longitudinale du véhicule, une accélération longitudinale, une pression de freinage d'au moins un cylindre de frein du véhicule (V) et un taux de variation de la pression de freinage.

3. Système de commande de freinage de confort (100) selon la revendication 1 ou la revendication 2, dans lequel le module de freinage de confort (20) stocke une plage de variation prédéterminée de chaque paramètre de freinage à chaque niveau de freinage de confort ; et la détermination du fait que la modification satisfait à une exigence de sécurité comprend : la détermination du fait que les un ou plusieurs paramètres de freinage modifiés se trouvent dans une plage de variation prédéterminée d'un niveau de freinage de confort actuel ; si le résultat de la détermination est affirmatif, la détermination du fait que la modification satisfait à l'exigence de sécurité ; et si le résultat de la détermination est négatif, la détermination du fait que la modification ne satisfait pas à l'exigence de sécurité.

4. Système de commande de freinage de confort (100) selon l'une quelconque des revendications 1 à 3, dans lequel l'évaluation du degré de confort comprend les étapes suivantes :

obtenir un paramètre de confort capable de caractériser le confort du véhicule pendant une période de freinage dans un processus de freinage du véhicule (V) ;
calculer une valeur absolue d'une différence entre une valeur de crête et une valeur de creux du paramètre de confort pendant la période de freinage ; et
évaluer le degré de confort sur la base de la valeur absolue de la différence pour obtenir un premier résultat d'évaluation, où le premier résultat d'évaluation comprend que plus la valeur absolue de la différence est petite, plus le degré de confort est élevé.

5. Système de commande de freinage de confort (100) selon la revendication 4, dans lequel le paramètre de confort comprend un ou plusieurs des éléments suivants : une accélération longitudinale du véhicule (V), un angle de tangage du véhicule (V) et une valeur de déplacement d'une suspension du véhicule (V).

6. Système de commande de freinage de confort (100) selon la revendication 4 ou la revendication 5, dans lequel l'évaluation du degré de confort sur la base de la valeur absolue de la différence comprend l'étape suivante :

déterminer si la valeur absolue de la différence est inférieure à un premier seuil de confort ;
si le résultat de la détermination est affirmatif, le premier résultat d'évaluation est que le confort est satisfaisant ; et
si le résultat de la détermination est négatif, le premier résultat d'évaluation est que le confort n'est pas satisfaisant.

7. Système de commande de freinage de confort (100) selon l'une quelconque des revendications 1 à 6, dans lequel le module de freinage de confort (20) stocke une accélération attendue dans le processus de freinage ; et l'évaluation du degré de confort comprend les étapes suivantes :

obtenir une accélération réelle pendant une période à grande vitesse dans le processus de freinage, la période à grande vitesse désignant une période pendant laquelle la vitesse du véhicule (V) diminue depuis une vitesse du véhicule au moment du déclenchement du freinage de confort jusqu'à une vitesse prédéterminée du véhicule ;
calculer une différence d'accélération entre l'accélération réelle et l'accélération attendue ; et évaluer le degré de confort sur la base de la différence d'accélération afin d'obtenir un deuxième résultat d'évaluation, où le deuxième résultat d'évaluation comprend que plus la différence d'accélération est proche de zéro, plus le degré de confort est élevé.

8. Système de commande de freinage de confort (100) selon la revendication 7, dans lequel l'évaluation du degré de confort sur la base de la différence d'accélération comprend l'étape suivante :

déterminer si la valeur absolue de la différence d'accélération est inférieure à un deuxième seuil de confort ;
si le résultat de la détermination est affirmatif, le deuxième résultat d'évaluation est que le confort est satisfaisant ; et
si le résultat de la détermination est négatif, le deuxième résultat d'évaluation est que le confort n'est pas satisfaisant.

**9.** Système de commande de freinage de confort (100) selon l'une quelconque des revendications 1 à 6, dans lequel le module de freinage de confort (20) stocke une accélération attendue dans le processus de freinage ; et l'évaluation du degré de confort comprend les étapes suivantes :

obtenir une accélération réelle pendant une période à grande vitesse dans le processus de freinage, la période à grande vitesse désignant une période pendant laquelle la vitesse du véhicule (V) diminue depuis une vitesse du véhicule au moment du déclenchement du freinage de confort jusqu'à une vitesse prédéterminée du véhicule ;
calculer une différence d'accélération entre l'accélération réelle et l'accélération attendue ;
calculer un rapport entre la différence d'accélération et l'accélération attendue ;
calculer une valeur absolue d'une différence entre le rapport et un seuil de rapport pour le rapport ; et
évaluer le degré de confort sur la base de la valeur absolue de la différence pour obtenir un troisième résultat d'évaluation, où le troisième résultat d'évaluation comprend que plus la valeur absolue de la différence est petite, plus le degré de confort est élevé.

**10.** Système de commande de freinage de confort (100) selon la revendication 9, dans lequel l'évaluation du degré de confort sur la base de la valeur absolue de la différence comprend l'étape suivante :

déterminer si la valeur absolue de la différence est inférieure à un troisième seuil de confort ;
si le résultat de la détermination est affirmatif, le troisième résultat d'évaluation est que le confort est satisfaisant ; et
si le résultat de la détermination est négatif, le troisième résultat d'évaluation est que le confort n'est pas satisfaisant.

**11.** Système de commande de freinage de confort (100) selon l'une quelconque des revendications 1 à 10, dans lequel

l'interface d'interaction homme-machine (10) est en outre configurée pour recevoir une note d'expérience utilisateur donnée par un utilisateur pour l'expérience du processus de freinage du véhicule après la modification ;
le module de freinage de confort (20) est en outre configuré pour calculer une note globale sur la base de la note d'expérience utilisateur et du résultat de l'évaluation du degré de confort ; et

l'interface d'interaction homme-machine est en outre configurée pour fournir la note globale.

**12.** Système de commande de freinage de confort (100) selon la revendication 11, dans lequel le calcul d'une note globale comprend le calcul de la note globale sur la base de la formule suivante :

$$F=c*A1+(1-c)*A2,$$

où F est la note globale ;
A1 est la note d'expérience de l'utilisateur après traitement de normalisation ;
A2 est le résultat de l'évaluation du degré de confort après traitement de normalisation ; et
c est un coefficient de pondération de A1 et 0<c<1.

**13.** Système de commande de freinage de confort (100) selon l'une quelconque des revendications 1 à 12, dans lequel le système de commande de freinage de confort (100) est disposé dans le véhicule (V) ;

l'interface d'interaction homme-machine (10) comprend au moins l'un des éléments suivants : une interface d'interaction vocale, un écran tactile et une touche physique ; et
le module de freinage de confort (20) est disposé dans une unité de commande du système de freinage (100) du véhicule ou dans un contrôleur de domaine du véhicule (V).

**14.** Procédé de commande de freinage de confort pour un véhicule, éventuellement mis en œuvre par le système de commande de freinage de confort (100) selon l'une quelconque des revendications 1 à 13, dans lequel le véhicule (V) comporte plusieurs niveaux de freinage de confort optionnels (CST_L1, CST_L2, ..., CST_Ln), chaque niveau de freinage de confort comprend un ou plusieurs paramètres de freinage correspondant au niveau de freinage de confort, et le procédé comprend les étapes suivantes :

fournir (1102) une interface pour modifier les un ou plusieurs paramètres de freinage ;
recevoir (1104) une modification d'au moins un des un ou plusieurs paramètres de freinage ;
déterminer (1106) si la modification satisfait à l'exigence de sécurité ;
autoriser (1110) la modification lorsqu'il est déterminé que la modification satisfait à l'exigence de sécurité ; et
interdire (1108) la modification lorsqu'il est déterminé que la modification ne satisfait pas à l'exigence de sécurité ; et
le procédé comprenant en outre d'évaluer (1112) un degré de confort de freinage du véhicule après la modification s'il est déterminé que la modification satisfait à l'exigence de sécurité.

Fig. 1

Fig. 2

300

302

304

306

3061

3062          3063

308

Fig. 3

400

402

404

406

Fig. 4

Fig. 5

Fig. 6

Fig. 7

Fig. 8

Fig. 9

Fig. 10

Fig. 11

**EP 4 292 888 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102018202737 A1
- DE 102018203679 A1